# EUROPÄISCHE PATENTSCHRIFT

(11) **EP 0 917 540 B1**
(45) Veröffentlichungstag und Bekanntmachung des Hinweises auf die Patenterteilung: **10.04.2002**
(21) Anmeldenummer: 97929471.7
(22) Anmeldetag: 23.07.1997
(51) Int. Cl.: C08B 31/04, C08L 3/06, C08L 67/02

(54) **THERMOPLASTISCH VERARBEITBARE STÄRKE BZW. STÄRKEDERIVAT-POLYMERMISCHUNGEN**
THERMOPLASTIC PROCESSABLE STARCH OR STARCH DERIVATIVE POLYMER MIXTURES
MELANGES POLYMERES D'AMIDON OU DE DERIVES DE L'AMIDON POUVANT ETRE FACONNES A L'ETAT THERMOPLASTIQUE

(30) Priorität: 09.08.1996 CH 196596
(43) Veröffentlichungstag der Anmeldung: 26.05.1999
(73) Patentinhaber: bio-tec Biologische Naturverpackungen GmbH & Co. KG, 46446 Emmerich (DE)
(72) Erfinder: TOMKA, Ivan, CH-8702 Zollikon (CH)
(74) Vertreter: Troesch Scheidegger Werner AG
(86) Internationale Anmeldenummer: IB9700915
(87) Internationale Veröffentlichungsnummer: WO9806755

(56) Entgegenhaltungen:
- EP-A- 0 596 437
- WO-A-95/25750
- WO-A-96/20220
- US-A- 5 540 929
- PATENT ABSTRACTS OF JAPAN vol. 16, no. 479 (C-992), 6.Oktober 1992 & JP 04 173868 A (NIPPON PETROCHEM CO LTD), 22.Juni 1992, & DATABASE WPI Week 9231 Derwent Publications Ltd., London, GB; AN 255765

## Beschreibung

Die vorliegende Erfindung betrifft ein Verfahren zur Herstellung von thermoplastisch verarbeitbaren Stärkepolymermischungen bzw. Stärkederivat-Mischungen gemäss dem Oberbegriff nach Anspruch 1 sowie ein Verfahren zu deren Herstellung und eine Reihe von Verwendungen.

Insbesondere betrifft die vorliegende Erfindung thermoplastisch verarbeitbare Umesterungsprodukte der Stärke oder Derivaten davon mit beispielsweise Lactonen, Esteramiden, Fettsäuren, etc. und/oder Polyestern bzw. anderen biologisch abbaubaren hydrophoben Polymeren sowie Mischungen von Umesterungsprodukten mit den genannten Polymeren. Ihre Anwendung wird dadurch begründet, dass zahlreiche Stärkesorten als makromolekulare Rohstoffe preiswerter sind als die bekannten thermoplastischen Werkstoffe.

Darüber hinaus betrifft die vorliegende Erfindung Verfahren zur Herstellung der Umesterungsprodukte der Stärke oder Derivaten, wie insbesondere Stärkeacetaten.

Thermoplastisch verarbeitbare Blends aus Stärke wurden im WO 90/05161 beschrieben. Thermoplastisch verarbeitbare Blends aus Stärke, aus Weichmachern und aus wasserunlöslichen Polymeren zeigen zwar beschränkte Wasseraufnahme und sind mit nützlichen mechanischen Festigkeiten ausgestattet, sind jedoch bei beliebigen Umgebungsfeuchten nicht auf die Dauer lagerfähig.

Darüber hinaus sind Umesterungsprodukte der Stärke in JP 05 125 101 beschrieben worden, die im Temperaturbereich 150 bis 170°C schmelzen, jedoch ist die Wasseraufnahme dieser Produkte aus der Umgebungsluft und die geringen mechanischen Eigenschaften für eine breite Anwendung ungeeignet. Die Herstellung dieser Produkte ist nach den bekannten Verfahren für einen breiten Einsatz prohibitiv.

In der vorliegenden Erfindung werden deshalb Mischungen aus Umesterungsprodukten der Stärke oder Derivaten davon mit niedermolekularen Lactonen, Estramiden, Fettsäuren, etc. sowie oligomeren Estern, Polyestern und anderen hydrophoben biologisch abbaubaren Polymeren vorgeschlagen. Diese Mischungen zeigen an den Phasengrenzen zwischen den Umesterungsprodukten und beispielsweise des Polyesters keine bevorzugte Rissbildung bei Deformation und gute Stabilität der mechanischen Eigenschaften bei der Lagerung und geben darüber hinaus keine niedermolekularen Substanzen in Kontakt mit Feuchtigkeit ab.

Die vorliegende Erfindung betrifft darüber hinaus ein Verfahren zur Herstellung von Umesterungsprodukten der Stärke oder Derivaten, wie insbesondere Stärkeacetaten mit beispielsweise Lactonen und/oder Polyestern in Gegenwart von Umesterungskatalysatoren.

Umesterungsprodukte der Stärke mit niedermolekularen Lactonen, wie Dilactid, Caprolacton (CL) oder Diglycolid sind bekannt. Ebenfalls bekannt sind Umesterungsprodukte aus Stärke und Polyestern, wie Polycaprolacton (PCL). Die Polyester-Komponente kann darüber hinaus ein Copolyester sein, z.B. aufgebaut aus Terephtalsäure, Adipinsäure, Ethylenglykol und Butandiol oder aus oligomeren Estern des Ethylenglykols und des Terephtalats umgeestert mit Caprolacton. Die verwendeten Polyester müssen jedoch im Temperaturbereich 60 bis 200°C schmelzbar sein.

In der vorliegenden Erfindung werden Umesterungsprodukte der Stärke oder von Stärkederivaten beschrieben, die mit geeigneten Polyestern und anderen biologisch abbaubaren, hydrophoben Polymeren zu thermoplastisch verarbeitbaren Mischungen mit nützlichen Eigenschaften verarbeitet werden können. Derartige Mischungen bestehen aus einer dispersen Phase des Veresterungsbzw. Umesterungsproduktes der Stärke und aus einer zusammenhängenden Phase des Polyesters bzw. hydrophoben, biologisch abbaubaren Polymers. Um geeignete mechanische Eigenschaften und Lagerfähigkeit unter unterschiedlichen Umgebungsfeuchten der Mischung erreichen zu können, sind makromolekulare Bestandteile notwendig, deren Moleküle die Phasengrenzen zwischen der dispersen und der zusammenhängenden Phase überbrücken. Sind derartige sogenannte Phasenvermittler nicht in ausreichender Menge in der Mischung inkorperiert, entstehen Thermoplaste mit Sollbruchstellen an den Phasengrenzen. Bestandteil der vorliegenden Erfindung ist, dass die Phasenvermittler mit Vorteil an den bereits vorhandenen Phasengrenzen gebildet werden. Werden nämlich die Phasenvermittler zu der Mischung aus Stärkeester und Polyester bzw. hydrophobem Polymer zugeschlagen, sind diese in höheren Anteilen als sonst erforderlich. Es ist weiter ausschlaggebend, dass die Polyester- bzw. Copolymersubstituenten der Stärke die gleiche oder sehr ähnliche chemische Zusammensetzung aufweisen wie die Polyester- bzw. Polymerkomponente der Mischung. Hierdurch wird die Mischbarkeit der Polyester bzw. Polymere gewährleistet. Des weiteren wurde gefunden, dass beispielsweise die Umesterungsprodukte der Stärke aus niedermolekularen Lactonen und Polyestern wesentlich geringere Festigkeiten aufweisen als die soeben beschriebenen mehrphasigen Mischungen. Auch dann, wenn beide die gleichen Anteile an makromolekularen Polyestern beinhalten; im zweiten Fall in Form von freien Makromolekülen und zu einem viel geringeren Anteil in Form von Blockcopolymeren, im ersten Fall ausschliesslich in Form von Blockcopolymeren.

Demgemäss werden gemäss einem ersten Aspekt in der vorliegenden Erfindung Mischungen aus Polyestern und Umesterungsprodukten der Stärke oder von Stärkederivaten vorgeschlagen. Die Moleküle der Umesterungsprodukte werden im Mittel wie folgt aufgebaut: zu 0,4 bis 0,6 Gewichtsanteilen aus Stärke-Resten, zu 0,6 bis 0,4 Gewichtsanteilen aus niedermolekularen Ester-Resten und zu 0,01 bis 0,05 Gewichtsanteilen aus hochmolekularen Ester-Resten.

Besondere Aufmerksamkeit wurde in der vorliegenden Erfindung dem Herstellungsprozess gewidmet. Die Umesterung der Stärke wird, mit teilweise oder vollständig geschmolzener Stärke oder von geschmolzenen Stärkederivaten, wie insbesondere Stärkeacetaten, vorgenommen. Beinahe alle bekannten Lösungs- oder Quellungsmittel für die Stärke, die als Zuschlagsstoffe für das Aufschmelzen der Stärke benötigt werden, können aus dem Reaktionsgemisch nach erfolgter Reaktion durch einfache Methoden, wie Entgasung, nicht entfernt werden. Eine Ausnahme bilden hier beispielsweise Wasser oder Ameisensäure. Wasser reagiert jedoch in Konkurrenz mit der Stärke mit den Umesterungsreagenzien ebenfalls. Deshalb wird das Wasser nur bis zum Erreichen eines gewissen niedrigen Umesterungsgrades der Stärke im System belassen und anschliessend durch Entgasung entfernt. Zu diesem Zeitpunkt liegt die Stärke bereits als Umesterungsprodukt vor und ist bei der Temperatur der Reaktionsmischung nach Entfernen des Wassers teilweise oder ganz aufgeschmolzen. Die Umesterung der Stärke erreicht den Substitutionsgrad 0,8 bis 1, d.h. von den drei Hydroxylgruppen der Anhydroglukose-Einheit im Stärkemolekül sind im Mittel 0,8 bis 1 verestert.

Wesentlich im erfindungsgemässen Verfahren ist die Durchmischung des Reaktionsgemisches, um die notwendigen Diffusionswege der molekularen Reaktionspartner zu reduzieren. Im weiteren soll die Stärke oder das Derivat, soweit nicht direkt schmelzbar, mit möglichst geringer Menge, beispielsweise an Wasser, aufgeschmolzen werden. Diese Vorgänge sowie die Entgasung der Reaktionsmasse zur gegebenen Zeit, können mit Vorteil in kontinuierlich arbeitenden Durchlaufknetern, wie in einem Zweiwellenkneter mit gleich-rotierenden Wellen, bewerkstelligt werden. Die Schneckenelemente sind mit Vorteil auswechselbar; für den Aufschmelzvorgang der Stärke werden Knetelemente, für die Entgasung Kompressions- und Dekompressionselemente und für die Reduktion der molekularen Diffusionswege Mischelemente benötigt.

Gemäss einer weiteren Ausführungsvariante wird vorgeschlagen, die Stärke oder Derivate davon mittels Ameisensäure in Schmelze zu bringen und anschliessend mit Lactonen, wie insbesondere Caprolacton umzusetzen. Dabei kann die Wassermenge der Stärke von praktisch trockener Stärke bis ca. 25 Gew.% variiert werden. Vorzugsweise jedoch beträgt der Wassergehalt der ursprünglich verwendeten Stärke maximal 10%, vorzugsweise 2 - 5%. Durch den Anteil Wasser können die Eigenschaften der Stärkepolymermischung, wie insbesondere des hergestellten Stärkeformiat-Hydroxicaproates beeinflusst werden. So gilt, dass je höher der Wassergehalt, je mehr Formiat gebildet wird und entsprechend je kleiner der Wassergehalt, desto mehr Caproat wird gebildet. Dabei ist die thermoplastische Verarbeitbarkeit umso besser, je mehr Caprolacton umgesetzt wird. Dagegen ist bei mehr Umsatz von Ameisensäure die Wasserresistenz besser. Auch hier gilt, dass nach Erreichen eines gewissen Substitutionsgrades der grundmolaren Einheit der Stärke das Wasser bzw. die Ameisensäure wenigstens teilweise vom Reaktionsgemisch abzuziehen ist.

Durch diese letztgenannte Reaktionsführung wird es möglich, einen gewissen Anteil am immer noch relativ teuren Caprolacton zu substituieren, wobei dies jedoch nur in dem Ausmasse möglich ist, wie eine Einschränkung der thermoplastischen Verarbeitbarkeit hingenommen werden kann.

Wiederum gemäss einer weiteren Ausführungsvariante der Erfindung wird vorgeschlagen, anstelle von Stärke ein Stärkeacetat zu verwenden, welches im Prinzip ohne das Hinzufügen eines zusätzlichen Weichmachers bzw. Plastifiziermittels schmelzbar ist. Respektive wird es möglich ein Stärkeacetat direkt mittels des Umesterungsreaktionspartners anzuquellen bzw. in einen schmelzfähigen Zustand zu bringen, wie dies beispielsweise durch das Hinzufügen eines Lactons, wie beispielsweise Caprolacton, ermöglicht wird. Durch die Verwendung von Stärkeacetaten wird eine sogenannt homogene Reaktionsführung möglich und zwar ohne die bei Verwendung reiner Stärke zwingend notwendigen Verwendung eines zusätzlichen Lösungsmittels, wie beispielsweise Wasser oder Ameisensäure.

Ein weiterer Vorteil der Verwendung von Stärkeacetaten liegt darin, dass die Klasse von Verbindungen, wie insbesondere Stärkediacetat auf dem Markt leicht erhältlich ist, und auch zu vernünftigen Preisen. So sind beispielsweise Stärkediacetate mit einem Substitutionsgrad in der Grössenordnung von 1,9 - 2,3 leicht erhältlich, welche für sich alleine kaum aufschmelzbar sind, jedoch zusammen mit Caprolacton in einem Temperaturbereich < 200°C aufgeschmolzen werden können, wodurch eine Umesterung ermöglicht wird. Reine Stärke hingegen kann zusammen mit Caprolacton nicht aufgeschmolzen werden, weshalb in letzterem Falle immer das Zusetzen eines Lösungsmittels bzw. Weichmachers erforderlich ist.

Die erfindungsgemäss vorgeschlagenen Veresterungs- bzw. Umesterungsprodukte der Stärke oder von Stärkederivaten sind nun geeignet, um mit einer Reihe von weiteren Polymeren gemischt zu werden, wobei durch die Anwesenheit dieser Umesterungs- bzw. Veresterungsprodukte die Mischbarkeit der Stärke oder von Stärkederivaten mit zusätzlichen Polymeren gewährleistet ist. Wie eingangs erwähnt, dienen diese Umesterungs- bzw. Veresterungsprodukte in diesem Falle als sogenannte Phasenvermittler. Allerdings können diese Umesterungs- bzw. Veresterungsprodukte auch für sich alleine als thermoplastisch verarbeitbare Polymere verwendet werden.

Dabei wird Stärke bzw. das Veresterungs- bzw. Umesterungsprodukt vorzugsweise mit hydrophoben, biologisch abbaubaren Polymeren gemischt, wie beispielsweise Polyester, Copolyester mit aliphatischen und aromatischen Blöcken, Polyesteramiden, Polyesterurethanen, Polyvinylalkohol, Ethylenvinylalkohol und/oder Mischungen davon. Insbesondere geeignet sind Polycaprolacton, Polylactide, Polyhydroxybuttersäure sowie Copolymere mit Valariansäure und/oder fermentativ hergestellten Polyestern.

Als weitere Mischkomponenten als biologisch abbaubare Polymere geeignet sich auch natürliche Polymere, wie Gelatine, Lignin, Cellulose, Derivate der vorgenannten Materialien und/oder Mischungen davon.

Weiter ist es möglich diesen Polymermischungen Füllstoffe, Fasern sowie weitere Additive beizufügen, wie allgemein üblich in der Kunststoff- bzw. Polymer-verarbeitenden Industrie.

Die Erfindung wird nun anschliessend anhand der beigefügten Beispiele näher erläutert, wobei diese Beispiele lediglich dazu dienen sollen, das Verständnis für die vorliegende Erfindung zu erhöhen und keinesfalls dazu geeignet sind, die vorliegende Erfindung einzuschränken.

### Beispiel 1

5 kg Stärke, 1,5 kg Wasser, 5 kg Caprolacton (CL) und 0,25 kg 1,8-Diazabicyclo(5.4.0)undec-7-en (DBU) werden in einem Zweiwellenextruder mit L/D = 20 und D = 46 mm bei 110°C und einer Umdrehungszahl der Schnecken von 50/Minuten aufgeschmolzen und extrudiert. Die mittlere Aufenthaltszeit der Masse im Extruder betrug 2,5 Minuten. Der Extrusionsvorgang wurde mit derselben Masse mehrmals wiederholt, jeweils bei den Extruder-Temperaturen: 110, 120, 140 und 160°C. Nach diesen Durchgängen wurde im nächsten Durchgang bei 180°C entgast und anschliessend fünf Durchgänge bei 180°C durchgeführt. Das Extrudat wurde in Dioxan 4-fach wiederholt extrahiert. Die Dioxan-Lösung enthielt das noch unreagierte CL, das PCL und das DBU. Das Massenverhältnis des mit der Stärke veresterten CL zu dem eingesetzten CL betrug nach dem 5. Durchgang 0,25 und nach dem 11. Durchgang 0,87. Die Dioxan-Lösung enthielt kein PCL. Der Nachweis des CL-Anteiles im gereinigten Umesterungsprodukt wurde mit ¹H-NMR Spektroskopie in 6D-Dimethylsulfoxyd-Lösung bei 80°C und mit IR-Spektroskopie durchgeführt und betrug nach dem 5. Durchgang 0,2 Massenanteile und nach dem 11. Durchgang 0,47 Massenanteile.

Das Umesterungsprodukt mit 0,47 Massenanteil CL-Rest wurde wie oben jedoch nur in 3 Durchgängen bei 180°C mit PCL im Masseverhältnis 1:1 umgesetzt. Der PCL-Rest im neuen Umesterungsprodukt betrug 0,02 Massenanteile.

Dieses Produkt enthielt noch 0,48 Massenanteile unreagiertes PCL und wurde auf die Festigkeit in einem einfachen Zugsversuch bei 20°C und einer Abzugsgeschwindigkeit von 10 cm/Minute geprüft. Die Spannung bei Druck war in allen Versuchen > 30 MPA. Die Wasseraufnahme bei 20°C und Wasseraktivität 1 betrug nach 20 Stunden 0,03 Massenanteile Wasser.

### Beispiel 2

In einem weiteren Versuch wurde wie im 1. Beispiel vorgegangen, jedoch nach zwei Durchgängen bei 106°C entgast und anschliessend wie in Versuch 1 vorgegangen. Die analytischen Ergebnisse und die Eigenschaften des Endproduktes waren innerhalb der Fehlergrenzen der Methoden gleich.

### Beispiel 3

Experimentelles: Native Kartoffelstärke (25g) (H₂O-Gehalt zwischen 2 und 25%) wurde bei 120°C im Kammerkneter bei 30 U/min. mit Ameisensäure (10g) aufgeschmolzen. Bei einem Wassergehalt von 9% wurden 2 Versuche durchgeführt, um die Reproduzierbarkeit der Resultate zu untersuchen. Nach 5 min. gab man zur homogenen klaren Schmelze Caprolacton (25g) hinzu. Proben wurden nach 60 und 120 min. entnommen und mit Dioxan (3 Mal) heiss extrahiert, um das unreagierte Acylierungsmittel zu entfernen.

### Resulate

Die Bestimmung des Caprolacton oder Formiatanteils wurde mit ¹H-NMR bei Raumtemperatur und bei 80°C durchgeführt. Infolge der nicht eindeutigen Integralhöhe der Stärkesignale wurde ein maximaler und ein minimaler Wert für die nachgewiesene Verbindung angegeben.

Die Ergebnisse sind in den Tabellen 1 und 2 zusammengefasst.

**Tabelle 1:**

| Substitutionsgradbestimmung (D.S) bei RT | | | | |
|---|---|---|---|---|
| 300K | CL-Gehalt | | Formiat Gehalt | |
| H₂O-Gehalt | D.S.max | D.S.min | D.S. max | D.S. min |
| 25 | 0,39 | 0,23 | 1,07 | 0,63 |
| 9 | 0,49 | 0,41 | 0,94 | 0,79 |
| 9 | 0,43 | 0,37 | 0,57 | 0,49 |
| 2 | 1,03 | 0,89 | 0,43 | 0,37 |

**Tabelle 2:**

| Substitutionsgradbestimmung (D.S) bei 80°C | | | | |
|---|---|---|---|---|
| 353 K | CL-Gehalt | | Formiat Gehalt | |
| H₂O-Gehalt | D.S.max | D.S.min | D.S.max | D.S.min |
| 25 | 0,49 | 0,27 | 0,74 | 0,4 |
| 9 | 0,53 | 0,26 | 1,02 | 0,49 |
| 9 | 0,37 | 0,34 | 0,48 | 0,44 |
| 2 | 0,89 | 0,66 | 0,38 | 0,28 |

Anhand der Messergebnisse ist ersichtlich:
1. Der Caprolactongehalt nimmt exponentiell mit der Abnahme des Wassers zu.
2. Der Formiatanteil nimmt mit absteigender Menge an Wasser leicht ab.

### Diskussion

Die unter den Punkten 1. und 2. gemachten Beobachtungen können wie folgt erklärt werden. Die Zunahme des Caprolactonanteils bei gleichzeitiger Abnahme des Wasseranteils wiederspiegelt die Abnahme der irreversiblen Caprolactonhydrolyse, die durch die Menge an Wasser bestimmt ist.

Ameisensäure geht mit Wasser keine Nebenreaktion ein, somit bleibt die Ameisensäuremenge konstant. Da Caprolacton eine höhere Reaktivität gegenüber Hydroxylgruppen der Stärke als Ameisensäure hat, reagiert es schneller mit den frei acylierbaren Hydroxylgruppen, und erniedrigt ihre Anzahl für die langsamere Reaktion mit Ameisensäure.

Obwohl in den drei vorangehenden Beispielen jeweils Caprolacton als Reaktionskomponente bei der Veresterung der Stärke bzw. des Stärkederivates verwendet worden ist, ist es selbstverständlich möglich, andere geeignete Veresterungs- bzw. Umesterungspartner zu verwenden, um eine thermoplastisch verarbeitbare Stärkepolymer-Komponente bzw. Mischung herzustellen. So haben sich nebst Caprolacton bzw. generell Lactonen grundsätzlich Ester, Esteramide, Dimerfettsäuren, modifizierte Fettsäuren, Säuremethylester, Esterpolyole, Glycerindrioleat und/oder Glycerinindilinolat als geeignete Reaktionspartner erwiesen. Selbstverständlich eignen sich gegebenenfalls auch entsprechend aus diesen Monomeren bzw. Oligomeren hergestellte Polymere, wie beispielsweise Polyesterpolyol, Polycaprolacton, Polyester hergestellt aus den genannten Polyolen und Fettsäuren, Polyesteramide, ect.

Wesentlich ist in jedem Fall, dass vor der Durchführung der jeweiligen Veresterung bzw. Umesterungsreaktion die Stärke bzw. das Stärkederivat mittels geeigneter Weichmacher oder Plastifiziermittel in Schmelze gebracht wird, wobei der verwendete Weichmacher bzw. das Plastifiziermittel, wie beispielsweise Wasser oder Ameisensäure bei Erreichen eines gewissen Substitutionsgrades der grundmolaren Einheiten der Stärke gegebenenfalls aus dem Reaktionsgemisch, beispielsweise mittels Entgasens, mindestens teilweise zu entfernen ist.

Dies ist dann nicht nötig, falls der Weichmacher bzw. das Plastifiziermittel, wie im Falle von Caprolacton beim entsprechenden Anquellen von Stärkediacetat gleichzeitig der Reaktionspartner ist, welcher bei der Umesterung bzw. Veresterung, beispielsweise des Stärkederivates, teilnimmt.

Schlussendlich ist es sowohl möglich direkt aus den erfindungsgemäss hergestellten Veresterungs- bzw. Umesterungsprodukte der Stärke bzw. Stärkederivate entsprechende Formkörper, Folien oder andere Extrudate herzustellen, oder aber zunächst diese Veresterungs- bzw. Umesterungsprodukte mit weiteren beispielsweise hydrophoben, biologisch abbaubaren Polymeren zu mischen, wie beispielsweise Polycaprolacton, um dann aus diesen Polymermischungen entsprechende Formkörper, Extrudate und dgl. herzustellen. Dabei wird vorzugsweise auch die letztgenannte Polymermischung in einem Arbeitsgang hergestellt, ohne dass zunächst das Umesterungs- oder Veresterungsprodukt isoliert und erneut einer Plastifiziereinheit, wie einem Extruder, zuzufügen ist.

## Patentansprüche

1. Verfahren zur Herstellung von thermoplastisch verarbeitbaren Stärkepolymermischungen bzw. Stärkederivatmischungen durch mindestens teilweise Umsetzen von Stärke oder Derivaten davon mit Estern, Esteramiden, Dimerfettsäuren, modifizierten Fettsäuren, Säuremethylestern, Esterpolyolen, Glyzerintrioleat und/oder Glyzerindilinolat, gegebenenfalls in Gegenwart von entsprechenden Katalysatoren, **dadurch gekennzeichnet, dass** zunächst die Stärke oder das Derivat gegebenenfalls mittels mindestens eines Weichmachers oder Plastifiziermittels, wie Wasser, Ameisensäure, Essigsäure, Caprolacton und dergleichen in Schmelze gebracht wird und zur Durchmischung des Reaktionsgemisches, um die notwendigen Diffusionswege der molekularen Reaktionspartner zu reduzieren, in einer Plastifiziereinrichtung, wie einem Extruder oder Kneter, umgesetzt wird, wobei bei Erreichen eines Substitutionsgrades der grundmolaren Einheiten der Stärke von ca. 0.8 freier, nicht gebundener Weichmacher bzw. Plastifiziermittel, wie z.B. Wasser, Ameisensäure oder Essigsäure, durch eine Entgasungseinheit mindestens teilweise aus dem Reaktionsgemisch abgezogen wird und die Reaktion bis zur wenigstens nahezu vollständigen Umsetzung weitergeführt wird.

2. Verfahren nach Anspruch 1, **dadurch gekennzeichnet, dass** als Ester ein Lacton und/oder ein Polyester verwendet wird.

3. Verfahren nach einem der Ansprüche 1 und 2, **dadurch gekennzeichnet, dass** als Stärkederivat ein Stärkeacetat verwendet wird.

4. Verfahren nach einem der Ansprüche 1 bis 3, **dadurch gekennzeichnet, dass** Stärke oder ein Derivat mit Ameisensäure und mindestens einem Lacton in der Schmelze umgesetzt wird.

5. Verfahren nach einem der Ansprüche 1 bis 4, **dadurch gekennzeichnet, dass** die verwendete Stärke oder das Stärkederivat 0,02 bis 0,5 Gewichtsanteile Wasser enthält.

6. Verfahren nach einem der Ansprüche 1 bis 5, **dadurch gekennzeichnet, dass** die Schmelze eine Temperatur von 80° bis 200°C aufweist, respektive die Umsetzung in diesem Temperaturbereich erfolgt.

7. Verfahren nach einem der Ansprüche 1 bis 6, **dadurch gekennzeichnet, dass** zunächst die Stärke oder ein Stärkederivat mit einem Wassergehalt von ca. 2 bis 10 Gew% zusammen mit Ameisensäure in Schmelze gebracht wird und anschliessend die so erzeugte Schmelze mittels Caprolacton umgesetzt wird und je nach zu erzeugenden Eigenschaften der schlussendlich thermoplastisch verarbeitbaren Stärkepolymermischung gegebenenfalls mehrheitlich Wasser oder gegebenenfalls mehrheitlich Ameisensäure mittels Entgasen abgezogen wird.

8. Verfahren nach einem der Ansprüche 1 bis 7, **dadurch gekennzeichnet, dass** Stärkediacetat zusammen mit Caprolacton in Schmelze gebracht und unter Verwendung eines geeigneten Umesterungs-Katalysators mindestens teilweise umgesetzt wird.

9. Verfahren nach einem der Ansprüche 1 bis 8, **dadurch gekennzeichnet, dass** man dem Reaktionsgemisch die Plastifizierarbeit von 0,05 bis 0,4 kWh/kg zuführt.

10. Verfahren nach einem der Ansprüche 1 bis 9, **dadurch gekennzeichnet, dass** man die Reaktionskomponenten zunächst in eine homogene, fliessfähige, thermoplastisch verarbeitbare Schmelze umwandelt, und die Schmelze in Mischeinheiten bis zur vollständigen Umsetzung behandelt.

11. Verfahren nach einem der Ansprüche 1 bis 10, **dadurch gekennzeichnet, dass** die Plastifizierung und das Aufschmelzen des Reaktionsgemisches, sowie die Mischung der Schmelze in einem kontinuierlich arbeitenden Durchlaufkneter, Zweiwellen-Knetextruder, Buss-Kokneter und Zahnradpumpe mit nachgeschaltetem statischem Sulzer-Mischer vorgenommen wird.

12. Verfahren nach einem der Ansprüche 1 bis 11, **dadurch gekennzeichnet, dass** die Verweilzeit des Reaktionsgemisches in der Plastifizier- und Mischeinheit 2 bis 30 Minuten beträgt.

13. Verfahren nach einem der Ansprüche 1 bis 12, **dadurch gekennzeichnet, dass** das Umsetzungsprodukt der Stärke oder der Derivate bzw. die Umesterungs- oder Veresterungsprodukte mit weiteren Polymeren gemischt werden, wie insbesondere mit hydrophoben, biologisch abbaubaren Polymeren, insbesondere ausgewählt aus der nachfolgenden Liste:
- aliphatische Polyester, wie Polycaprolacton, Polylactide, Polyhydroxybuttersäure, Copolymere mit Valariansäure und/oder fermentativ hergestellte Polyester,
- Copolyester, aufweisend aromatische wie auch aliphatische Blöcke,
- Polyesteramide,
- Polyesterurethane,
- Polyvinylalkohol,
- Ethylenvinylalkohol und/oder Mischungen davon.

14. Verfahren nach einem der Ansprüche 1 bis 13, **dadurch gekennzeichnet, dass** das Umsetzungsprodukt der Stärke oder des Stärkederivates bzw. das Veresterungs- bzw. Umesterungsprodukt aus der Stärke oder dem Stärkederivat weiter mit mindestens einem der nachfolgenden Materialen gemischt wird:
- Gelatine, Lignin, Cellulose, Derivate der vorgenannten Materialien und/oder Mischungen davon.

15. Thermoplastisch verarbeitbare Stärkepolymermischung bzw. Stärkederivatmischung, hergestellt nach einem dem Verfahren nach einem der Ansprüche 1 bis 14, enthaltend mindestens ein Veresterungs- bzw. Umesterungsprodukt aus Stärke oder einem Stärkederivat mit einem Ester, wie Lacton und/oder einem Polyester, einem Esteramid und/oder Polyesteramid, einer Dimerfettsäure, einer modifizierten Fettsäure, einem Säuremethylester, einem Esterpolyol oder einem Polyesterpolyol, Glyzerintrioleat und/oder Glyzerindilinolat, wobei die Moleküle der Umesterungsprodukte im Mittel aus zu 0,4 bis 0,6 Gewichtsanteilen aus Stärke-Resten, zu 0,6 bis 0,4 Gewichtsanteilen an niedermolekularen Ester-Resten und zu 0,01 bis 0,05 Gewichtsanteilen aus hochmolekularen Ester-Resten aufgebaut sind.

16. Polymermischung nach Anspruch 15, **dadurch gekennzeichnet, dass** sie nebst dem Veresterungs- bzw. Umesterungsprodukt weiter mindestens eines der nachfolgenden Polymere enthält:
- aliphatische Polyester,
- Copolyester mit aliphatischen und aromatischen Blöcken,
- Polyesteramid,
- Polyesterurethan,
- Polyvinylalkohol,
- Ethylenvinylalkohol und/oder Mischungen der vorangenannten Polymere.

17. Polymermischung nach einem der Anspruche 15 oder 16, **dadurch gekennzeichnet, dass** die Mischung weiter eine der nachfolgenden Materialien enthält:
- Gelatine, Lignin, Cellulose, Derivate der vorgenannten Materialien und/oder Mischungen davon.

18. Polymermischung nach einem der Ansprüche 15 bis 17, **dadurch gekennzeichnet, dass** die Mischung weiter Füllstoffe enthält, wie beispielsweise Fasern und/oder andere Verstärkungsmaterialen.

19. Polymermischung nach einem der Ansprüche 15 bis 18, **dadurch gekennzeichnet, dass** die Polymermischung Additive enthält, wie insbesondere Weichmacher, Pigmente, gegebenenfalls Vernetzungsadditive, usw.

20. Polymermischung nach einem der Ansprüche 15 bis 19, **dadurch gekennzeichnet, dass** das Umesterungsprodukt aus bis zu 0,6 Gewichtsanteilen Stärke besteht.

21. Folien, Rohre sowie weitere Extrudate, **gekennzeichnet durch** eine Polymermischung nach einem der Ansprüche 1 bis 14, mindestens enthaltend ein Umesterungs- bzw. Veresterungsprodukt der Stärke bzw. von Stärkederivaten.

22. Formkörper bzw. mittels Spritzguss hergestellte Materialien, **gekennzeichnet durch** eine Polymermischung nach einem der Ansprüche 1 bis 14, enthaltend ein Umesterungs- bzw. Verersterungsprodukt der Stärke bzw. Stärkederivate.

## Claims

1. Method of producing thermoplastic processable starch polymer mixtures or starch derivative mixtures through at least partial conversion of starch or derivatives thereof with esters, ester amides, dimeric fatty acids, modified fatty acids, acid methyl esters, ester polyols, glycerol trioleates and/or glycerol dilinolates, optionally in the presence of corresponding catalysts, **characterised in that** initially the starch or derivative is brought to a melt optionally by means of at least one softener or plasticiser such as water, formic acid, acetic acid, caprolacton and the like and for thorough mixing of the reaction mixture in order to reduce the necessary diffusion paths of the molecular reaction partners is converted in a plasticising device such as an extruder or kneader, wherein on attainment of a substitution degree of the basic molar units of the starch of about 0.8, free, non-bound softener or plasticiser, such as water, formic acid or acetic acid, is removed at least partly from the reaction mixture by a degassification unit and the reaction is continued until at least almost complete conversion.

2. Method according to claim 1, **characterised in that**, as ester, a lacton and/or a polyester is used.

3. Method according to one of claims 1 and 2, **characterised in that** a starch acetate is used as starch derivative.

4. Method according to one of claims 1 to 3, **characterised in that** starch or a derivative is converted into the melt by formic acid and at least one lacton.

5. Method according to one of claims 1 to 4, **characterised in that** the starch or starch derivative used contains 0.02 to 0.5 parts by weight of water.

6. Method according to one of claims 1 to 5, **characterised in that** the melt has a temperature of 80 to 200°C or the conversion respectively is carried out in this temperature range.

7. Method according to one of claims 1 to 6, **characterised in that** initially the starch or a starch derivative with a water content of about 2 to 10 weight percent is brought, together with formic acid, to a melt and subsequently the thus-produced melt is converted by means of caprolacton and, in accordance with the respective characteristics to be produced of the final thermoplastic processible starch polymer mixture, optionally the majority of the water or optionally the majority of the formic acid is removed by degassing.

8. Method according to one of claims 1 to 7, **characterised in that** starch diacetate together with caprolacton are brought to a melt and at least partly converted with use of a suitable transesterification catalyst.

9. Method according to one of claims 1 to 8, **characterised in that** the plasticising work of 0.05 to 0.4 kWh/kg is supplied to the reaction mixture.

10. Method according to one of claims 1 to 9, **characterised in that** the reaction components are initially converted into a homogeneous, flowable thermoplastic processible melt and the melt is treated in mixing units until complete conversion.

11. Method according to one of claims 1 to 10, **characterised in that** the plasticising and melting of the reaction mixture as well as the mixing of the melt is carried out in a continuously operating continuous kneader, twin-shaft kneader-extruder, Buss co-kneader and geared pump with downstream static Sulzer mixer.

12. Method according to one of claims 1 to 11, **characterised in that** the dwell time of the reaction mixture in the plasticising and mixing unit amounts to 2 to 30 minutes.

13. Method according to one of claims 1 to 12, **characterised in that** the conversion product of the starch or the derivative or the transesterification or esterification products is or are mixed with further polymers, such as in particular, with hydrophobic, biologically degradable polymers, in particular selected from the following list:
- aliphatic polyester, such as polycaprolacton, polylactide, polyhydroxybutyric acid, copolymers with valarian acids and/or fermentationally produced polyester,
- copolyester, having aromatic as also aliphatic blockers,
- polyesteramide,
- polyesterurethane,
- polyvinylalcohol,
- ethylvinylalcohol and/or mixtures thereof.

14. Method according to one of claims 1 to 13, **characterised in that** the conversion product of the starch or the derivative or the esterification or transesterification product from the starch or starch derivative is further mixed with at least one of the following materials:
- gelatine, lignin, cellulose, derivatives of the aforesaid materials and/or mixtures thereof.

15. Thermoplastic processible starch polymer mixture or starch derivative mixtures produced according to one of the methods according to one of claims 1 to 14, containing at least one esterification or transesterification product from starch or a starch derivative with an ester, such as lacton and/or a polyester, an ester amide and/or a polyester amide, a dimer fatty acid, a modified fatty acid, an acid methyl ester, and ester polyol or a polyester polyol, glycerol trioleate and/or glycerol dilinolate, wherein the molecules of the transesterification products are composed in the mean from up to 0.4 to 0.6 parts by weight of starch groups, up to 0.6 to 0.4 parts by weight of low-molecular ester groups and up to 0.01 to 0.05 parts by weight of high-molecular ester groups.

16. Polymer mixture according to claim 15, **characterised in that** apart from the esterification and transesterification product it further contains at least one of the following polymers:
- aliphatic polyester,
- copolyester with aliphatic and aromatic blockers,
- polyesteramide,
- polyesterurethane,
- polyvinylalcohol
- ethylvinylalcohol and/or mixtures of the aforesaid polymers.

17. Polymer mixture according to one of claims 15 and 16, **characterised in that** the mixture further contains one of the following materials:
- gelatine, lignin, cellulose, derivatives of the aforesaid materials and/or mixtures thereof.

18. Polymer mixture according to one of claims 15 to 17, **characterised in that** the mixture contains further fillers, such as for example fibres and/or other reinforcing materials.

19. Polymer mixture according to one of claims 15 to 18, **characterised in that** the polymer mixture contains additives, such as, in particular, softeners, pigments, optionally wetting additives, etc.

20. Polymer mixture according to one of claims 15 to 19, **characterised in that** the transesterification product consists of up to 0.6 parts by weight of starch.

21. Films, tubes and other extrudates, **characterised by** a polymer mixture according to one of claims 1 to 14, at least comprising a transesterification or an esterification product of the starch or starch derivatives.

22. Moulded body or materials which are produced by means of injection moulding, **characterised by** a polymer mixture according to one of daims 1 to 14, comprising a transesterification or an esterification product of the starch or starch derivatives.

## Revendications

1. Procédé de préparation de mélanges façonnables de manière thermoplastique de polymères d'amidon ou de dérivés d'amidon, par réaction au moins partielle d'amidon ou de ses dérivés avec des esters, des esteramides, des acides gras dimères, des acides gras modifiés, des esters méthyliques d'acide, des esters de polyols, des trioléates de glycérol, et/ou du dilinoléate de glycérol, le cas échéant en présence de catalyseurs correspondants,
**caractérisé en ce que**
l'amidon ou le dérivé est d'abord amené en fusion, éventuellement à l'aide d'au moins un agent plastifiant ou d'un agent de ramollissement comme l'eau, l'acide formique, l'acide acétique, la caprolactone et similaires, et est mis à réagir en vue du mélange complet du mélange réactionnel, afin de réduire les parcours de diffusion nécessaires du partenaire de réaction moléculaire, dans un dispositif de ramollissement comme une extrudeuse ou un malaxeur, dans lequel, lors de l'obtention d'un degré de substitution d'environ 0,8 des éléments moléculaires de base de l'amidon, l'agent plastifiant ou l'agent de ramollissement libre, non lié comme par exemple l'eau, l'acide formique ou l'acide acétique, est soutiré au moins partiellement du mélange réactionnel par une unité de dégazage, et la réaction est poursuivie jusqu'à au moins réaction à peu près complète.

2. Procédé selon la revendication 1,
**caractérisé en ce que**
comme ester on utilise une lactone et/ou un polyester.

3. Procédé selon l'une quelconque des revendications 1 et 2,
**caractérisé en ce que**
comme dérivé de l'amidon on utilise un acétate d'amidon.

4. Procédé selon l'une quelconque des revendications 1 à 3,
**caractérisé en ce qu'**
on fait réagir l'amidon ou un dérivé avec l'acide formique et au moins une lactone, à l'état fondu.

5. Procédé selon l'une quelconque des revendications 1 à 4,
**caractérisé en ce que**
l'amidon ou le dérivé d'amidon utilisé contient de 0,02 à 0,5 parties en poids d'eau.

6. Procédé selon l'une quelconque des revendications 1 à 5,
**caractérisé en ce que**
la fusion s'effectue à une température allant de 80 à 200°C, et la réaction s'effectue dans cette zone de températures.

7. Procédé selon l'une quelconque des revendications 1 à 6,
**caractérisé en ce qu'**
en premier lieu l'amidon ou un dérivé d'amidon ayant une teneur en eau d'environ 2 à 10 % en poids est amené à la fusion conjointement avec de l'acide formique et ensuite le produit de fusion ainsi produit est mis à réagir à l'aide de caprolactone et selon les propriétés à obtenir du mélange de polymères d'amidon façonnable de manière thermoplastique en définitive, l'eau éventuellement majoritaire ou l'acide acétique éventuellement majoritaire est éliminé au moyen d'un dégazage.

8. Procédé selon l'une quelconque des revendications 1 à 8,
**caractérisé en ce qu'**
on amène le diacétate d'amidon conjointement au moins partiellement en utilisant un catalyseur de transestérification approprié.

9. Procédé selon l'une quelconque des revendications 1 à 8,
**caractérisé en ce qu'**
on amène au mélange réactionnel le travail de ramollissement de 0,05 à 0,4 kWh/kg.

10. Procédé selon l'une quelconque des revendications 1 à 9,
**caractérisé en ce qu'**
on transforme les composants de réaction en premier lieu en un produit de fusion homogène, apte à l'écoulement, façonnable de manière thermoplastique, et on traite le produit de fusion dans des unités de mélange jusqu'à conversion complète.

11. Procédé selon l'une quelconque des revendications 1 à 10,
**caractérisé en ce que**
le ramollissement et la mise en fusion du mélange réactionnel ainsi que le mélange du produit de fusion est effectué dans un malaxeur à passage travaillant en continu, une extrudeuse de malaxeur à deux axes, un comalaxeur Buss et une pompe à engrenage avec un malaxeur Sulzer statique post connecté.

12. Procédé selon l'une quelconque des revendications 1 à 11,
**caractérisé en ce que**
le temps de séjour du mélange réactionnel dans l'unité de ramollissement et de mélange s'élève de 2 à 30 minutes.

13. Procédé selon l'une quelconque des revendications 1 à 12,
**caractérisé en ce que**
le produit de réaction de l'amidon ou des dérivés ou les produits de transestérification ou d'estérification sont mélangés avec d'autres polymères comme en particulier avec des polymères dégradables biologiquement hydrophobes, choisis en particulier dans la liste suivante :
- polyester aliphatique comme la polycaprolactone, des polylactides, l'acide polyhydroxybutyrique, des copolymères avec l'acide valérianique et/ou un polyester préparé par fermentation,
- un copolyester possédant des blocs aromatiques comme aussi aliphatiques,
- des polyesteramides,
- des polyesteruréthanes,
- de l'alcool polyvinylique,
- de l'éthylène/alcoolvinylique et/ou des mélanges de ceux-ci.

14. Procédé selon l'une quelconque des revendications 1 à 13,
**caractérisé en ce que**
le produit de réaction de l'amidon ou du dérivé de l'amidon ou du produit d'estérification ou de transestérification provenant de l'amidon ou du dérivé d'amidon, continue à être mélangé avec au moins un des matériaux suivants :
- gélatine, lignine, cellulose, dérivés des matériaux précités et/ou mélanges de ceux-ci.

15. Mélange de polymères d'amidon ou de dérivés d'amidon façonnable de manière thermoplastique, produit selon l'un des procédés selon l'une quelconque des revendications 1 à 14,
contenant au moins un produit d'estérification ou de transestérification provenant de l'amidon ou d'un dérivé d'amidon avec un ester, comme une lactone et/ou un polyester, un esteramide, et/ou un polyesteramide, un acide gras dimère, un acide gras modifié, un ester méthylique d'acide, un ester de polyol ou un polyester de polyol, le trioléate de glycérol, et/ou le dilinoléate de glycérol, dans lequel les molécules des produits de transestérification sont constituées en moyenne jusqu'à 0,4 à 0,6 parties en poids de restes d'amidon, pour 0,6 à 0,4 parties en poids de restes d'ester à bas poids moléculaire et pour 0,01 à 0,05 de parties en poids en restes d'ester de haut poids moléculaire.

16. Mélange de polymères selon la revendication 15,
**caractérisé en ce qu'**
il contient à côté du produit d'estérification ou de transestérification encore au moins un des polymères suivants :
- polyester aliphatique,
- copolyester avec des blocs aliphatiques et aromatiques,
- polyesteramide,
- polyesteruréthane,
- alcool polyvinylique,
- alcool éthylène/vinylique et/ou des mélanges des polymères cités précédemment.

17. Mélange de polymères selon l'une quelconque des revendications 15 ou 16,
**caractérisé en ce que**
le mélange contient encore un des matériaux suivants :
- gélatine, lignine, cellulose, dérivés des matériaux précités et/ou mélanges de ceux-ci.

18. Mélange de polymères selon l'une quelconque des revendications 15 à 17,
**caractérisé en ce que**
le mélange contient en outre des substances de charge comme par exemple des fibres et/ou d'autres matériaux de renforcement.

19. Mélange de polymères selon l'une quelconque des revendications 15 à 18,
**caractérisé en ce que**
le mélange de polymère renferme des additifs comme en particulier des agents plastifiants, des pigments, le cas échéant des additifs de réticulation, etc...

20. Mélange de polymères selon l'une quelconque des revendications 15 à 19,
**caractérisé en ce que**
le produit de transestérification consiste en jusqu'à 0,6 parties en poids d'amidon.

21. Feuilles, tubes ainsi qu'autres extrudats,
**caractérisés par**
un mélange de polymère selon l'une quelconque des revendications 1 à 14, contenant au moins un produit de transestérification ou d'estérification de l'amidon ou de dérivés d'amidon.

22. Corps moulés ou matériaux produits par moulage par injection,
**caractérisés par**
un mélange de polymère selon l'une quelconque des revendications 1 à 14, contenant un produit de transestérification ou d'estérification de l'amidon ou des dérivés de l'amidon.
